Europäisches Patentamt

(19) European Patent Office

Office européen des brevets

(11) Publication number: **0 181 051**
**A2**

(12) **EUROPEAN PATENT APPLICATION**

(21) Application number: **85303415.5**

(22) Date of filing: **15.05.85**

(51) Int. Cl.⁴: **H 04 M 1/62**
**H 04 M 1/60**

(30) Priority: **05.11.84 US 668576**

(43) Date of publication of application:
**14.05.86 Bulletin 86/20**

(84) Designated Contracting States:
**CH DE FR GB LI**

(71) Applicant: **BIERBAUM-MARTIN, INC.**
**One Whitehall Street**
**New York, N.Y. 10004(US)**

(72) Inventor: **Primavera, Angelo**
**2648 Frances Street**
**Bellmore New York, 11710(US)**

(74) Representative: **Colgan, Stephen James et al,**
**CARPMAELS & RANSFORD 43 Bloomsbury Square**
**London WC1A 2RA.(GB)**

(54) **Telephone apparatus with speaker amplifier.**

㊐ A telephone station instrument can be used with either a two-wire or a four-wire point-to-point circuit. The instrument is provided with a handset and also with an internal loud speaker and amplifier. The amplifier is provided with a manual cut-off switch disposed on a front panel of the instrument housing, and a light or LED indicating whether the speaker is on or off. An incoming signaling LED, a hookswitch actuator, a signal key, and a voice-actuated lamp or LED are also disposed on a front panel of the housing. The housing of the instrument is generally rectangular in shape to facilitate stacking of several of these instruments one atop the other.

EP 0 181 051 A2

FIG.1B

This invention relates to telephony, and is more particularly directed to telephone apparatus and system especially suited for use in point-to-point communications. The present invention is more particularly concerned with an improved telephone that includes a speaker amplifier, and which is particularly well suited for the brokerage trade wherein there is a concentration of point-to-point phone instruments at one location, each of which is connected to a similar phone instrument at a respective remote location.

Many businesses, such as brokerages for commodities, foreign currencies, stocks and bonds, or other volatilely priced goods, are characterized by a concentration of dealers or brokers within a room and all within earshot of one another. Each broker is linked by several point-to-point phone instruments to a number of remote locations. For example, for a foreign exchange broker, the remote locations can be at various international banks and other financial institutions which might be concerned with buying or selling foreign currencies.

Typically, each point-to-point instrument has a loudspeaker associated with it, usually arranged as a speaker amplifier connected in parallel with the earpiece of the instrument handset. The loudspeaker permits all of the brokers or dealers assembled at one location to listen in, and exchange price information with all of the parties at the various remote locations. In effect, one of the group of brokers can interact with the remote party while the rest of the group of brokers are passive listeners. While one of the brokers is negotiating a particular trade, the remaining brokers', although not active in that particular trade, are made aware of the prices involved, and can quickly share this information with the remote parties with which they must deal. Consequently, one trade may lead to a rapid succession of other trades, with the prices steered in the direction of maximum market efficiency.

While the other brokers need price information immediately, the closing of the trade can be conducted privately. Normally, after the remote party has presented its offer, the particular broker that that party is dealing with will turn down the volume of the speaker amplifier while he is negotiating the final details of the trade. After the trade is complete, the broker will turn the volume control back up to its normal listening level.

This arrangement has been more-or-less satisfactory, at least as compared with other known arrangements. However, the arrangement requires a large number of point-to-point telephone instruments with their associated speaker amplifiers for each broker among the assembled group, and the clutter caused by this does present drawbacks. Among these drawbacks are that the dense cluster of telephone equipment, together with its tangle of connecting wires, takes up the lion's share of the dealer's desk space. This dense sprawl of telephones does not permit room for note taking, much less room for such amenities as an ashtray or a coffee cup. Also, the control of the speaker amplifiers by means of the volume control knob is rather inconvenient, and leads to frequent maintenance problems. Further, the broker must rely entirely on voice recognition to know which remote party is speaking at a given time. Fortunately the broker usually deals with the same distant parties day after day, and has no problem recognizing voices. However, the reliance on voice recognition can be a problem in the case that the broker or the distant party is away, for example on vacation or because of illness, and a new broker is filling in.

Accordingly, it is an object of this invention to provide telephone apparatus and a telephone system which overcome the difficulties of the prior art.

It is a more particular object of this invention to provide a point-to-point telephone instrument which is reliable and easy to maintain.

It is another object of this invention to provide such instruments which can be stacked, one instrument on top of another, to save space and to minimize desk clutter.

It is a related object of this invention to provide modular telephone instruments which will facilitate the installation and/or replacement of the telephone instruments.

It is yet another object of this invention to provide telephone apparatus having a telephone amplifier therein and a speaker cut-off switch which permits the user to turn the speaker amplifier on and off quickly without having to change the setting of the volume control.

It is still another object of this invention to provide a telephone instrument having indicator lamps, such as a speaker-on lamp, an incoming signaling lamp, and a VOX lamp displayed on a front panel of the instrument, so that, at a glance, the user can know the busy status of the line associated with a particular instrument.

It is a more particular object of this invention to provide a telephone instrument having a VOX or voice-actuated lamp thereon, so that the user will know, at any time that a distant party is speaking, which distant party it is that is attempting to communicate with him.

According to an aspect of this invention, a telephone instrument is provided for coupling to a point-to-point, or dedicated telephone line. The telephone line can be a two-wire line, having a tip conductor (or wire) and a ring conductor (or wire), or a four-wire line, having receive tip and receive ring conductors and transmit tip and transmit ring conductors. A modular connector on the housing of the telephone permits coupling to the telephone line, and a network, or hybrid within the housing has inputs coupled to the tip and ring conductors and outputs. A modular handset coupler is connected to the outputs of the network for coupling to a telephone handset, and has a pair of transmit wires going to a mouthpiece on the handset and a pair of receive wires going to an earpiece of the handset. A loudspeaker arrangement is mounted within the housing, i.e., on a front panel thereof, for producing an amplified audio voice output. The loudspeaker arrangement has an input impedance, such as a pair of DC-blocking capacitors, coupled to the receive wires going to the handset coupler, and also has a speaker cut-off switch, with a manual actuator disposed on the front panel of the housing for selectively turning off the speaker without cutting off the receive wires from the earpiece of the handset. In a favorable embodiment, the loudspeaker arrangement includes a loudspeaker, an amplifier having an audio input and a power input, and a line power supply having an output connected to the power input of the amplifier and inputs coupled to the tip and ring conductors of the telephone line to derive power for the amplifier from the telephone central-office battery. The speaker cut-switch is coupled to the power supply circuit for selectively cutting off and applying the power therefrom to the power input of the amplifier. Preferably, an indicator light, i.e. an LED, is coupled in series between the power supply circuit and the power input of the amplifier to be lit when the amplifier is on, and to be dark otherwise. A voice actuated switch can be connected to the tip and ring conductors, and can have outputs powering an indicator light or LED when a voice signal above a threshold appears on the telephone line.

In several preferred embodiments, the housing is generally a rectangular parallepiped in shape, with rectangular front, side, rear, top, and bottom panels. The speaker and the various indicator lamps and controls are concentrated on the front panel, with the top and bottom panels being substantially free of obstructions. This permits several like telephone apparatus to be stacked, one atop the other, each associated with a given respective telephone line.

According to another aspect of this invention, a point-to-point telephone system has a plurality of the telephone instruments of this invention disposed at a central location, and has another plurality of telephone instruments disposed each at a given one of a plurality of remote locations, with a sufficient number of point-to-point telephone circuits each connecting one of the telephone instruments at the central location to its associated telephone instrument at a remote location.

By preference, the speaker cut-off switch is a manual switch, such as a push button or toggle switch, which must be positively actuated by the user to cut off the speaker. This is different from a proximity switch, and from an automatic switch of the type sometimes included in speaker telephones for combating audio feedback, or the so-called "Larsen" effect. In the disclosed environment, a dealer must be assured that the speaker will not be cut off until he is ready to consummate a trade, so he must be able to positively actuate the speaker cut-off switch. Thus, the aforementioned pricing and trading information will not be lost to other members of the trading group.

Also, certain terms used in this description are exemplary, and not meant to limit the invention. For example to terms "wire" and "conductor" mean a communications conductor generally, and could be copper wire, or could, for example, be an optical fiber, in certain circumstances. Similary, the term "handset" is used to mean any combination of earpiece and mouthpiece, and could be a headset or a hands-free arrangement, in suitable circumstances.

The above and many other objects, features, and advantages of this invention will become apparant from the following detailed description of preferred embodiments thereof, which are offered by way of example, and without expressing or implying any limitation to the scope of this invention.  The ensuing description is to be considered in connection with the accompanying drawings, wherein:

Figure 1A is an environmental perspective view of an arrangement of telephone instruments according to the prior art;

Figure 1B is an environmental perspective view showing an arrangement of telephone instruments according to this invention;

Figure 2 is a schematic circuit diagram of one embodiment of the telephone apparatus of this invention;

Figure 3 is a schematic circuit diagram of another embodiment of this invention; and

Figure 4 is a partial schematic diagram illustrating an alternative arrangement of the embodiment of Figure 2.

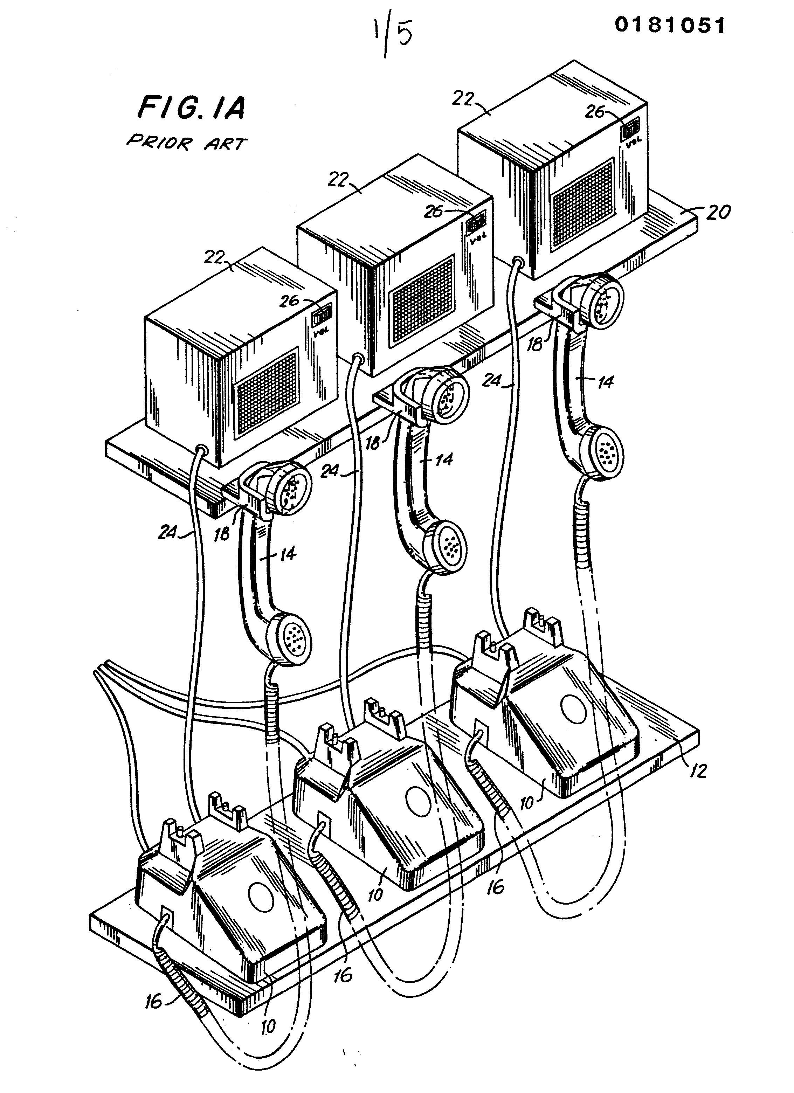

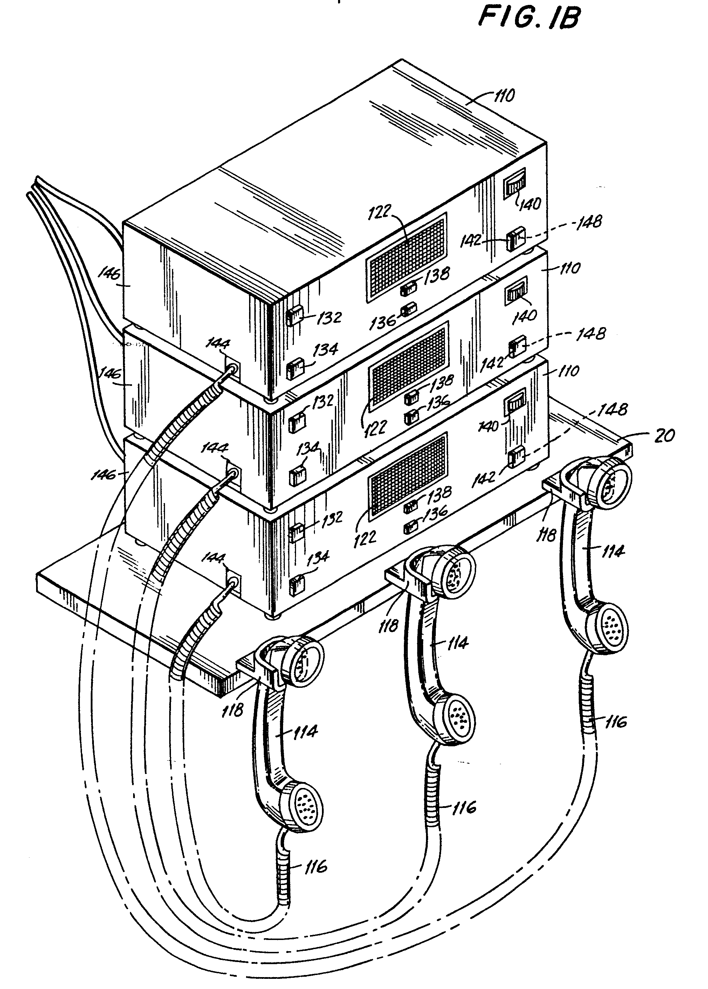

With reference to the drawings, and initially to Figure 1A thereof, there is illustrated an arrangement typical of a broker's work station, for example, in a spot-trading room or in a futures-trading room. While this work station has three lines associated with it, Applicant hastens to point out that the typical work station has many more lines and instruments; only three are shown here to minimize the amount of clutter in the drawing. There can be a dozen or more telephone instruments disposed in the narrow confines of a single broker work station.

As shown in Figure 1A, the telephone apparatus of the prior art typically includes a plurality of telephone set bodies or bases 10 each disposed on a desk top 12. Three handsets

-13-

14, here shown with connecting cords 16 going to their respective telephone set bases 10, are typically cradled in a cradle mount 18 away from the bases 10. These cradle mounts 18 are positioned on an edge of a shelf 20 disposed over the desk top 12. Also, on the shelf 20 are a plurality of speaker amplifiers 22, each having a connecting cord 24 going to a respective one of the telephone set bases 10. A volume control knob 26 is located on the front of each of the speaker amplifiers 22.

Typically, if the broker using these telephone lines desires to contact a particular remote party, e.g., his counterpart at a bank or other financial institution, he depresses and releases the hookswitch in the cradle of the associated telephone set base 10. This produces an audible ringing at the remote location. When the broker contacts his counterpart, the broker's voice is picked up by the mouthpieces in all of the handsets 14, and is carried over the point-to-point circuits to all of the remote locations. Similarly, when the remote party speaks, his voice comes out of the particular speaker amplifier 22 associated with his point-to-point telephone line, and he can be heard by all of the other brokers within the room. Once a particular deal or trade has been struck and the details are to be worked out, the broker picks up the associated handset 14 from the cradle mount 18 and then must rotate the volume control knob 26 to reduce the volume of the speaker amplifier 22. When the deal is complete, the broker must remember to turn the volume control knob to set the volume of the speaker amplifier 22 back to its original setting, or else valuable information may be lost to him or to the other brokers in the room. The act of turning the volume control down and then back up several dozen times each day tends to wear out the volume control potentiometer in short order. This leads to increased maintenance and repair costs.

By contrast to the foregoing, the arrangement employing telephone instruments of this invention, as shown in Figure 1B, provides a compact and convenient arrangement, with a minimum of desk clutter and a maximum of efficiency and control.

As shown in Figure 1B, a corresponding three telephone sets 110 are each contained in a generally rectangular box-like housing, stacked one atop the other on the shelf 20. Each has an associated handset 114 connected thereto by a cord 116 and supported on a cradle mount 118 on an edge of the shelf 20.

Each of the telephone sets 110 has an internal speaker 122 mounted on a front panel 124 thereof, a signal lamp or LED 132 for indicating a signalling voltage on line (i.e., an incoming call), a push-button hookswitch or cut-off switch 134, a signalling key 136, a VOX or voice-actuated lamp or LED 138, a speaker volume-control knob 140, and a speaker cut-off push-button switch 142, all being situated on the front panel 124 of the housing for the telephone set 110.

A modular handset four-wire connector 144 is disposed on a side panel 146. Not shown in this view are two modular connectors each disposed in a rear panel and each having eight conductors for connecting to the telephone line. Also, a speaker-on indicator lamp or LED 148 is disposed in the front panel 124 of the telephone set 110, preferably behind a clear push button of the speaker cut-off switch 142.

It is readily apparent that the absence of the phone bodies or bases 10 leaves the desk top 12 clear below the shelf 20. Also, because the sets 110 have housings formed as rectangular parallelepipeds, the sets 110 can easily
be stacked one atop the other to further
minimize desk top clutter.

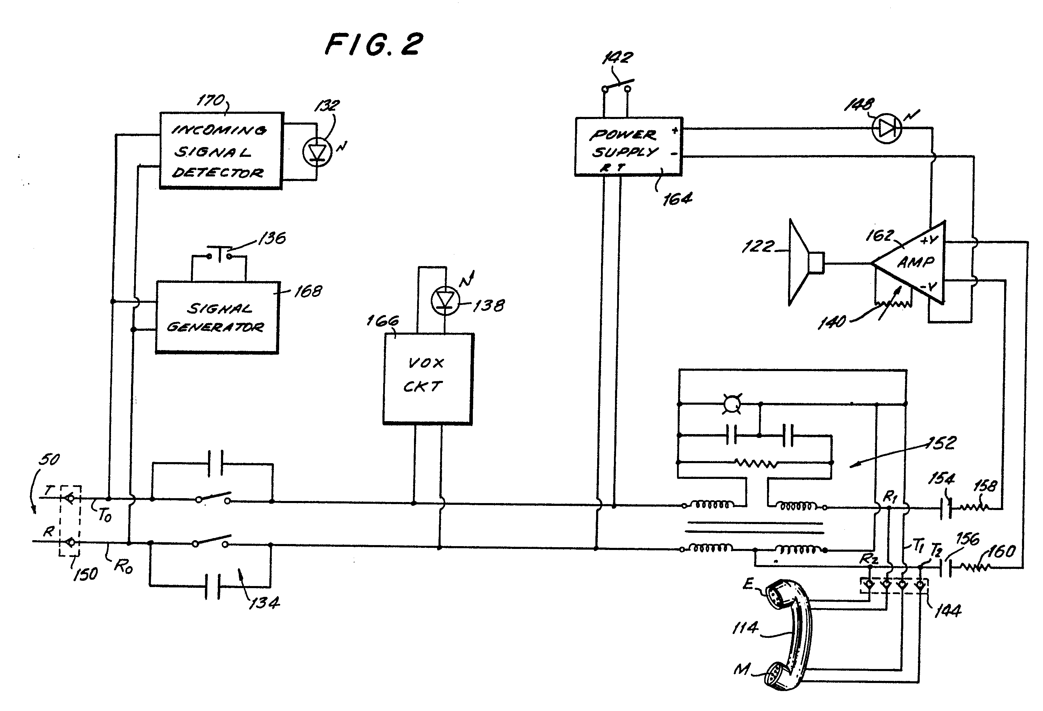

The circuitry for a preferred
embodiment of the telephone set 110 of
this invention is shown schematically in
Figure 2.  This embodiment is adapted for
connection to a two-wire telephone line
50, that is, one having a tip conductor T
and a ring conductor R.  Here, the
telephone line 50 is a point-to-point, or
dedicated telephone line.  That is, the
telephone line 50 is not a "trunk" and
does not enter the telephone switching
network at the central office, but rather
is continuously connected to another like
instrument at a distant location.  The
line is coupled, through a modular line
cord connector 150, to internal tip and
ring conductors $T_0$ and $R_0$, which are
connected to inputs of a network or hybrid
circuit 152.  The hookswitch 134 is shown
to be interposed between the modular connector 150 and the network 152. The latter has a pair of receive outputs $R_1$ and $R_2$ and transmit inputs $T_1$ and $T_2$. In this embodiment, the output $R_2$ and the input $T_2$ are tied together. The modular handset connector 144 has terminals tied to these outputs and inputs $R_1$, $R_2$, $T_1$, $T_2$; these outputs and inputs lead to an earpiece E and a mouth- piece M of the handset 114. DC-blocking coupling capacitors 154 and 156 are connected to receive outputs $R_1$ and $R_2$ of the network 152, and these, in turn, are connected through impedance devices 158 and 160 to audio inputs of an audio amplifier 162. The output of this amplifier 162 is fed to the speaker 122.

A line power supply circuit 164 has inputs connected respectively to the tip $T_0$ and ring $R_0$ conductors in advance of the network 152. This circuit 164 supplies a regulated DC power from outputs thereof to power inputs of the amplifier 162.  Here the speaker-on LED 148 is shown connected in series in one conductor between the power supply circuit 164 and the amplifier 162.  This LED 148 will emit light continuously as long as power is applied to the amplifier 162, that is, whenever the speaker is operative.  However, this LED 140 will be dark when power is cut off from the speaker amplifier 162.

The speaker cut-off switch 142 is operationally coupled to the power supply circuit 164 and is actuated to turn the speaker amplifier 162 on or off by controlling the power supply circuit 164.

The volume control 140 is here shown schematically as a variable resistor or potentiometer coupled to the amplifier 162.  The exact configuration of the volume control 140 is, of course, a matter of circuit design, and is not central to this invention.

A VOX circuit, or voice actuated switch 166 is here shown connected to the tip and ring conductors $T_0$ and $R_0$ in advance of the network 152. Alternatively, this VOX circuit 166 could be coupled to the receive outputs $R_1$ and $R_2$ of the network 152. The VOX circuit 166 has outputs connected to corresponding terminals of the VOX LED 138. The circuit 166 is operative to light the LED 138 when the incoming voice signal is above a predetermined threshold. The VOX circuit 166 and the associated LED 138 are useful in identifying which telephone set 110, and which associated telephone line 50 are in use when one of the many distant parties speaks. The user need not rely on voice recognition alone, but can identify the line in use at a glance by noticing which LED 138 on which telephone set 110 is lit. Preferably, the VOX LED 138 can produce a flutter in response to detected voice on line, but, alternatively, the LED 138 could produce a steady light.

Further shown in this embodiment, are a signal generator 168 coupled to the tip and ring conductors $T_0$ and $R_0$, and in an incoming signal detector 170 having inputs coupled to the tip and ring conductors $T_0$ and $R_0$. The signal key 136, here shown as a normally-open pushbutton switch 136, is connected to the signal generator 168.

Depression of the signal key 136 causes the signal generator 168 to produce a signaling voltage (which can be a signalling tone) to signal through to the distant location. The incoming signal detector 170 detects the signalling tone or voltage emitted from the telephone set 110 at the distant location, and in response to the detected signalling voltage or signalling tone, lights the indicator LED 132.

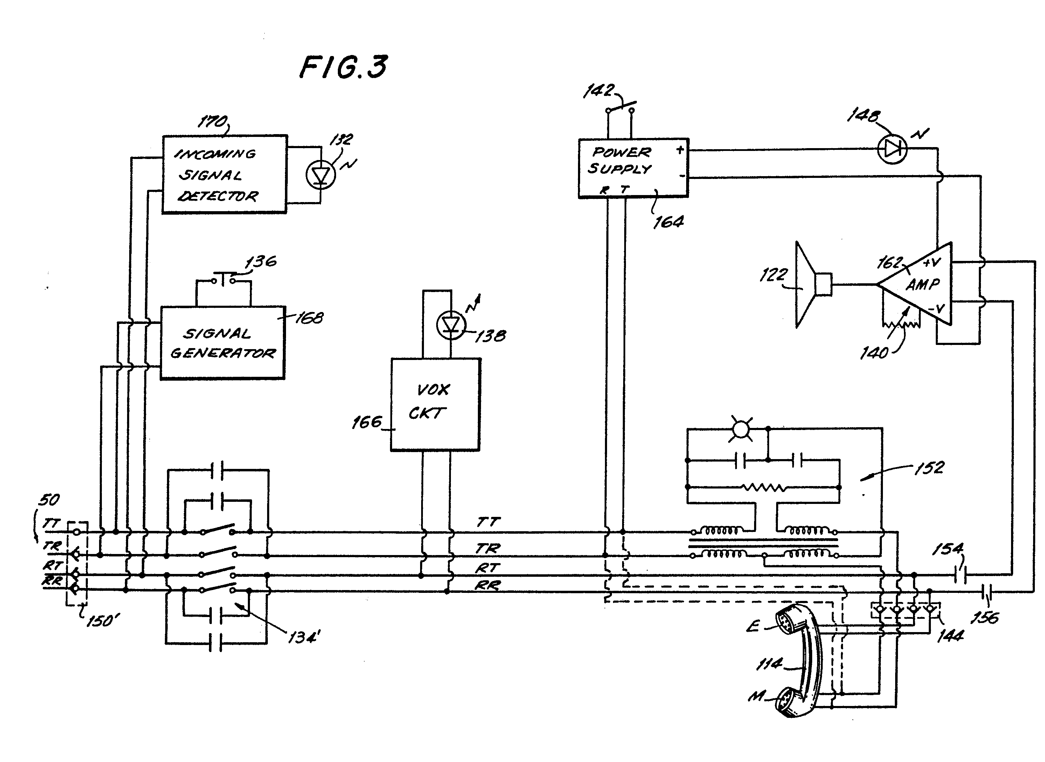

Another embodiment of this invention is shown in Figure 3. Here, the embodiment is structurally similar to that of Figure 2, except it is adapted to be used with a four-wire phone line 50'. In this embodiment, generally the same reference numbers are used as in Figure 2, except that those elements which are modified for four-wire use are primed.

In this case, the four-wire line, including a transmit tip conductor TT, a transmit ring conductor TR, a receive tip conductor RT, and a receive ring conductor RR, are coupled through a four-wire modular connector 150 and a four-wire hookswitch 134 to the network 152. Here, the transmit conductors TT and TR are connected to the network, and the receive conductors RT and RR are connected directly to the handset modular connector 144 and, through the coupling capacitors 154 and 156, to the inputs of the loudspeaker amplifier 162. The operation of this embodiment is otherwise generally the same as that of Figure 2.

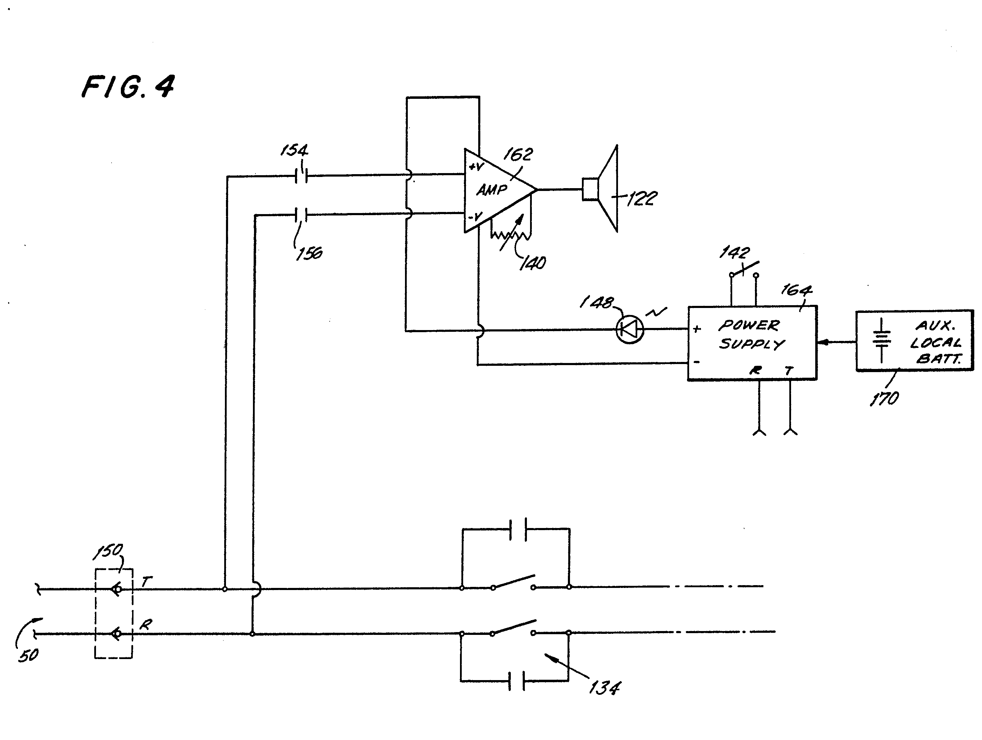

Figure 4 illustrates an alternative arrangement of the speaker amplifier 162 and its associated input coupling capacitors 154 and 156. Here, the coupling capacitors 154 and 156 are connected directly to the tip and ring conductors T and R in advance of the hookswitch 134. In this arrangement, the speaker 122 is always active, even when the hookswitch 134 is open. In order to ensure that there is always power supplied to the amplifier 162, even when the hookswitch 134 is open, an auxiliary local battery 170 is connected to the power supply 164. This arrangement ensures that there is working current supplied to the amplifier 162 even when there is no central-office battery provided on the tip and ring conductors T and R.

Incidentally, the values of the capacitors 154 and 156 and the associated impedances 158 and 160 can be selected to minimize feedback from the speaker 122 to the mouthpiece M of the handset 114. Certain frequencies are responsible for the "ringing" which can occur when the handset 114 is held too close to the speaker 122. The values of these elements 154, 156, 158, and 160 are selected, in connection with the operating parameters of the amplifier 162, to attenuate those frequencies more and to minimize the feedback ringing that will occur, without the need to cut off the speaker 122 or the handset 114.

While the present invention has been described hereinabove with reference to certain preferred embodiments, it is to be understood that the invention is not limited to those embodiments. Indeed, many modifications and variations would be apparent to those of skill in the art without departure from the scope and spirit of this invention, as defined in

appended claims.

IN THE CLAIMS:

1.        Telephone apparatus comprising a housing; line connector means for coupling a telephone line including at least a tip conductor and a ring conductor; network means within said housing and having inputs coupled to said tip and ring conductors, and outputs; handset connector means connected to the outputs of said network means for coupling to a telephone handset and having a pair of transmit conductors going to a mouthpiece of said handset and a pair of receive conductors going to an earpiece of said handset; loudspeaker- amplifier means mounted within said housing for producing an amplified audible voice output and including audio input means coupled to the receive conductors of the handset connector means; and speaker cut-off switch means disposed on said housing for selectively turning off said loudspeaker-amplifier means without cutting off the receive conductors from the earpiece of said handset.

2.      Telephone apparatus according to claim 1, wherein said loudspeaker means includes a loudspeaker, an amplifier having an audio input and a power input, power supply means having an output connected to said power input of said amplifier and inputs coupled to said tip and ring conductors of said telephone line to derive power for the amplifier from central-office battery; said audio input means including an impedance device coupled to said receive conductors.

3.      Telephone apparatus according to claim 2, wherein said speaker cut-off switch means is coupled to said power supply means selectively to cut-off and apply power therefrom to said power input of said amplifier.

4.      Telephone apparatus according to claim 3, further comprising an indicator light coupled to said power supply means to be lit when said power is being applied to said amplifier and to be dark otherwise.

5.      Telephone apparatus according to claim 4, wherein said indicator light is an LED coupled in series between said power supply means and the power input of said amplifier.

6.      Telephone apparatus according to claim 1, further comprising a voice-actuated switch having inputs coupled to said tip and ring conductors, and outputs powering an indicator light when a voice signal above a threshold appears on the telephone line.

7.      Telephone apparatus according to claim 1, further      comprising a signal generator for producing a signalling
voltage for alerting a party at a distant
telephone apparatus, a signalling key
switch disposed on a front panel of said
housing for actuating said signal
generator, and outputs coupled to said tip
and ring conductors; and incoming signal
detector means including a detector
circuit having inputs coupled to said tip
and ring wires for detecting a signalling
voltage from said distant telephone
apparatus, and indicator means connected
to said detector for producing an
indication perceptible to an operator when
said signalling voltage appears on said
telephone line.

8.      Telephone apparatus according to
claim 7, wherein said indicator means is
an LED disposed on the front panel of said
housing.

9.      Telephone apparatus according to claim 1, wherein said housing is generally a rectangular parallelepiped in shape, having a rectangular front panel in which are situated said loudspeaker-amplifier means and said speaker cut-off switch means; rectangular side and back panels on at least one of which are situated said handset connector means and said telephone line connector means; and rectangular top and bottom panels.

10.     Telephone apparatus according to claim 9, wherein said top and bottom panels are substantially free of controls, indicators, and connectors to facilitate stacking said apparatus one atop another.

11.     Telephone apparatus according to claim 1, wherein the loudspeaker-amplifier means further includes a volume control disposed on said housing and settable for controlling the gain of said loudspeaker-amplifier means, and wherein said speaker cut-off switch means is separate from said volume control and is operative without disturbing the setting of said volume control.

12. Telephone apparatus comprising a generally rectangular housing having a rectangular front panel and side and back panels; a phone line connector disposed in one of said side and back panels for coupling to a telephone line having a tip conductor a ring conductor; a handset connector disposed in one of said side and back panels for coupling to a handset having a mouthpiece and an earpiece, and having a transmit conductor pair going to said mouthpiece and a receive conductor pair going to said earpiece; network means within said housing having inputs coupled to said tip and ring conductors and terminals connected to said transmit and receive conductor pairs; a speaker amplifier having audio inputs connected to said receive wire pair and an output; a speaker mounted on the front panel within said housing and connected to the output of the speaker amplifier; line power supply circuit means having inputs operatively coupled to said tip and ring conductors and power outputs coupled to power inputs of said amplifier; a speaker-on LED mounted on the front panel of said housing and electrically connected in series between a power output of said line power supply circuit means and a power input of said amplifier; and a manual speaker cut-off switch disposed on the front panel of said housing and operatively connected to said line power supply circuit means for selectively cutting off power to said amplifier.

13.	Telephone apparatus according to claim 12, further comprising a signal generator having outputs coupled to said tip and ring conductors for applying a signalling voltage thereto; a signal key disposed on the front panel of said housing and operatively connected to said signal generator; an incoming signal detector having inputs coupled to said tip and ring conductors for detecting a signalling voltage thereon and having outputs; and a signalling LED disposed on the front panel of said housing and connected to the outputs of said detector.

14.     Telephone apparatus according to claim 12, further comprising a manual hookswitch disposed on the front panel of said housing and connected in line between said network means and said phone line connector.

15.     Telephone apparatus according to claim 12, wherein said telephone line is a two-wire point-to-point line.

16.    Telephone apparatus according to claim 12, wherein said telephone line is a four-wire point-to-point line having a transmit tip wire, a transmit ring wire, a receive tip wire, and a receive ring wire.

17.    Telephone apparatus comprising a housing, line connector means for coupling a point-to-point telephone line including at least a tip conductor and a ring conductor; network means within said housing and having inputs coupled to said tip and ring conductors and outputs; handset connector means connected to the outputs of said network means for coupling to a telephone handset and having a pair of transmit conductors going to a mouthpiece of said handset and a pair of receive conductors going to an earpiece of said handset; loudspeaker-amplifier means mounted within the housing for producing an amplified audible voice output; capacitive connector means for connecting said loudspeaker-amplifier means to said tip and ring conductors in advance of said network means; and speaker cut-off switch means disposed on said housing for selectively turning off said loudspeaker-amplifier means without cutting off the receive conductors from the earpiece of said handset.

18.     A point-to-point telephone system having a plurality of telephone instruments disposed at a central location and another plurality of telephone instruments disposed at a corresponding plurality of remote locations, and a plurality of point-to-point telephone circuits each connecting one of the telephone instruments at the central location to one said telephone instrument at the corresponding one of said remote locations; said telephone instruments, at least at the central location, each comprising a generally rectangular housing; a phone line connector disposed on said housing for coupling to a tip wire and a ring wire of the associated point-to-point circuit; a handset connector disposed on said housing for coupling to a handset having a transmit conductor pair going to a mouthpiece of said handset and a receive conductor pair going to an earpiece of said handset; network means within said housing having inputs coupled to said tip and ring wires and outputs connected to said transmit and receive conductor pairs; loudspeaker-amplifier means mounted within said housing and having audio inputs connected to said receive conductor pair for producing an amplified audible voice output; and manual speaker cut-off switch means disposed on said housing for selectively turning off said loudspeaker-amplifier means without cutting off the receive conductor pair from the earpiece of said handset.

19.    A point-to-point telephone system according to claim 18, wherein said telephone instruments at said central location also comprise a volume control disposed on said housing and settable for controlling the gain of said loudspeaker-amplifier, and said manual speaker cut-off switch is separate from said volume control and is operative without disturbing the setting of said volume control.

20.    A point-to-point telephone system according to claim 18, further comprising attenuation means in advance of said loudspeaker-amplifier means for eliminating resonant feedback between said loudspeaker-amplifier means and the mouthpiece of said handset without cutting off either the mouthpiece or the speaker-amplifier.

**FIG. 1A**
PRIOR ART

FIG.IB

FIG.2

FIG.3

# FIG. 4